(19) Europäisches Patentamt
European Patent Office
Office européen des brevets

(11) Veröffentlichungsnummer : **0 189 373 B1**

(12) # EUROPÄISCHE PATENTSCHRIFT

(45) Veröffentlichungstag der Patentschrift : **13.03.91 Patentblatt 91/11**

(51) Int. Cl.[5] : **C08B 11/14,** C08B 37/00, C08B 31/12, C07C 323/60, C07C 323/63, C02F 1/28, B01J 39/22, B01D 15/08

(21) Anmeldenummer : **86810019.9**

(22) Anmeldetag : **17.01.86**

(54) **Anionisch modifizierte Polysaccharide, Verfahren zu deren Herstellung und deren Verwendung.**

(30) Priorität : **22.01.85 CH 277/85**

(43) Veröffentlichungstag der Anmeldung : **30.07.86 Patentblatt 86/31**

(45) Bekanntmachung des Hinweises auf die Patenterteilung : **13.03.91 Patentblatt 91/11**

(84) Benannte Vertragsstaaten : **BE CH DE FR GB IT LI NL SE**

(56) Entgegenhaltungen :
**EP-A- 0 001 989**
**DE-A- 1 695 846**
**GB-A- 2 025 921**
**US-A- 2 837 511**

(73) Patentinhaber : **CIBA-GEIGY AG**
**Klybeckstrasse 141**
**CH-4002 Basel (CH)**

(72) Erfinder : **Merz, Jürg, Dr.**
**Langgartenstrasse 51**
**CH-4105 Biel-Benken (CH)**

**EP 0 189 373 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft auf chemischem Wege anionisch modifizierte Polysaccharide.

Aus z.B. der deutschen Offenlegungsschrift 2 925 689 sind auf chemischem Wege anionisch modifizierte Cellulosematerialien bekannt, die in der Abwasserreinigung, insbesondere zum Entfernen von Farbstoffen Verwendung finden. Diese bekannten, anionisch modifizierten Cellulosematerialien stellen Polysaccharide dar, die β-glycosidisch verknüpft sind. Die an den Cellulosebestandteil gebundenen, sauren Reste der bekannten anionisch modifizierten Cellulosematerialien entsprechen insbesondere der Formel

$$(1) \quad Z-CH_2-CH_2-CO-NH-CH_2-O-,$$

worin Z Carboxyl oder den Säurerest einer mehrbasischen, anorganischen, Sauerstoff enthaltenden Säure, wie z.B. Schwefeloder Phosphorsäure bedeutet.

Es wurde nun gefunden, dass an sich neue, α-glycosidisch und/oder β-glycosidisch verknüpfte, auf chemischem Wege anionisch modifizierte Polysaccharide unerwarteterweise auch die vorteilhaften Eigenschaften aufweisen, die ihre Anwendung u.a. als stationäre Phase in der chromatographischen Trennung von amphoter oder kationisch geladenen Substanzgemischen ermöglichen, wobei die erfindungsgemässen Polysaccharide als Gegenstand der vorliegenden Erfindung sich dadurch auszeichnen, dass sie an den Polysaccharidbestandteil gebundene, saure Reste der Formel

$$(2) \quad \overset{Q_1^{\oplus}}{R_1^{\ominus}}-S-CH_2-CH_2-CO-NH-CH_2-O-$$

aufweisen, worin $R_1^{\ominus}$ Carboxyalkyl oder Dicarboxyalkyl mit 1 bis 5 Kohlenstoffatomen im Alkylteil, Carboxyphenyl oder Ketocarboxymethyl und $Q_1^{\oplus}$ ein wasserlösliches Kation bedeuten.

Das Herstellungsverfahren für die anionisch modifizierten Polysaccharide, deren Verwendung zum Trennen von Substanzgemischen, chromatographische Trennverfahren, bei welchen die anionisch modifizierten Polysaccharide eingesetzt werden, Methylolverbindungen als Zwischenprodukte zur Herstellung der anionisch modifizierten Polysaccharide und das Herstellungsverfahren dieser Methylolverbindungen bilden weitere Gegenstände der vorliegenden Erfindung.

Als Vertreter von α-glycosidisch verknüpften Polysacchariden kommen vor allem Stärke und ihre Abkömmlinge wie z.B. Dextran und die Dextrine, insbesondere Weissdextrin, in Betracht. Auch nicht ausschliesslich α-glycosidisch verknüpfte Polysaccharide kommen in Frage, wie z.B. Agarose, die aus abwechselnden Einheiten von β-1,3-verknüpfter D-Galaktopyranose und α-1,4-verknüpfter 3,6-Anhydro-L-galaktopyranose besteht. Gegebenfalls können die erfindungsgemässen Polysaccharide ganz oder teilweise vernetzt sein. Unvernetzte Dextrine, unvernetzte Agarose, vernetzte Dextrine, vernetztes Dextran oder vernetzte Agarose, die anionisch modifiziert sind und α-glykosidische Verknüpfungen aufweisen, sind bevorzugt. Im Vordergrund des Interesses steht indessen β-glykosidisch verknüpfte Cellulose. Hierbei kommen den Handelsmarken SOLCA FLOC® BW 60, BW 100 und BW 200, SERVA® HBS und S & S® 123 eine besondere Bedeutung zu.

Die sauren Reste bevorzugter, anionisch modifizierter Polysaccharide entsprechen der Formel

$$(3) \quad \overset{Q_2^{\oplus}}{R_2^{\ominus}}-S-CH_2-CH_2-CO-NH-CH_2-O-,$$

worin $R_2^{\ominus}$ $^{\ominus}OOC-(CH_2)_{m_1}-$ , $^{\ominus}OOC-(CH_2)_{n-1}-\underset{CH_3}{CH}-$ , $^{\ominus}OOC-(CH_2)_{n-1}-\underset{^{\ominus}OOC}{CH}-$ ,

$^{\ominus}OOC-CO-CH_2-$ oder 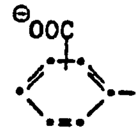 ,

$Q_2^{\oplus}$ Wasserstoff, ein Alkalimetall-oder Ammoniumkation, $m_1$ eine ganze Zahl von 1 bis 5 und n 1 oder 2 bedeuten, vor allem der Formel

(4) $Q_3^{\oplus}$ $R_3^{\ominus}-S-CH_2-CH_2-CO-NH-CH_2-O-$,

worin $R_3^{\ominus}$ 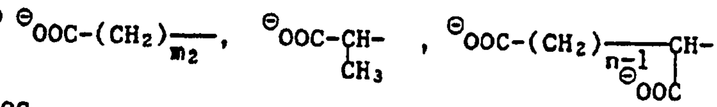

oder 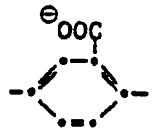 bedeutet und $Q_3^{\oplus}$ für $H^{\oplus}$, $K^{\oplus}$, $Na^{\oplus}$ oder $NH_4^{\oplus}$,

$m_2$ für 1, 2 oder 3 und n für 1 oder 2 stehen, und insbesondere der Formel

(5) 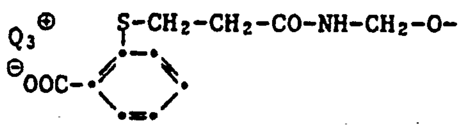 ,

(6) 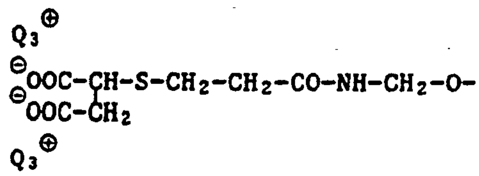 ,

(7) 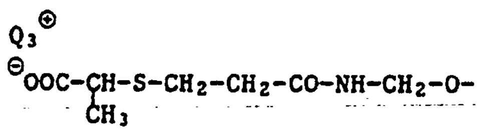 oder

(8) $Q_3^{\oplus}$ $^{\ominus}OOC-CH_2-S-CH_2-CH_2-CO-NH-CH_2-O-$,

worin $Q_3^{\oplus}$ die angegebenen Bedeutungen hat.

Die sauren Reste der anionisch modifizierten Polysakaride, die im Vordergrund des Interesses stehen, entsprechen der Formel

(9) $Na^{\oplus}$ $^{\ominus}OOC-CH_2-S-CH_2-CH_2-CO-NH-CH_2-O-$ .

Die erfindungsgemässen, anionisch modifizierten Polysaccharide weisen in der Regel einen Substitutionsgrad, bezogen auf die primäre $-CH_2OH$-Gruppe einer Saccharoseeinheit, von etwa 0,1 bis etwa 0,95, vorzugsweise 0,2 bis 0,85 auf. Der Substitutionsgrad wird aufgrund des Schwefel- oder Stickstoffgehalts des modifizierten Polysaccharides bestimmt.

Bei der Herstellung der erfindungsgemässen, anionisch modifizierten Polysaccharide geht man im allgemeinen so vor, dass man ein Polysaccharid der angegebenen Art als Ausgangsmaterial nach an sich bekannter Weise mit einer N-Methylolamidgruppe aufweisenden Verbindung umsetzt. Hierbei werden z.B. als N-Methylolverbindungen solche der Formel

$$(10)\quad \overset{Q_1^{\oplus}}{R_1^{\ominus}}-S-CH_2-CH_2-CO-NH-CH_2-OH$$

eingesetzt, worin $R_1^{\ominus}$ und $Q_1^{\oplus}$ die angegebenen Bedeutungen haben.

Die Verbindungen der Formel (10) sind an sich neu und werden nach an sich bekannten Methoden hergestellt, indem man eine Verbindung der Formel

$$(11)\quad R_1-SH\ ,$$

worin $R_1$ die angegebenen Bedeutungen hat, zuerst mit Acrylamid und anschliessend mit Formaldehyd oder einem Formaldehyd abgebenden Mittel, vorzugsweise in äquimolaren Mengen, umsetzt.

Hierbei wird die Addition von Acrylamid an die Verbindung der Formel (11) vorzugsweise in wässrigem, alkalischem Medium bei pH-Werten von etwa 9 bis etwa 11 und bei Temperaturen von etwa 30 bis 100°C durchgeführt.

Die anschliessende Methylolierung erfolgt zweckmässig ebenfalls in wässrigem, alkalischem Medium bei pH-Werten von etwa 8 bis etwa 11, vorzugsweise bei höchstens 100°C, insbesondere etwa 30 bis etwa 60°C. Als Alkali wird z.B. Natriummethylat, vor allem Ammoniak oder Kalium- oder insbesondere Natriumhydroxid und als Formaldehyd abgebendes Mittel z.B. Trioxan, Hexamethylentetramin oder insbesondere Paraformaldehyd eingesetzt.

Je nach Bedeutung von $R_1$ wird als Verbindung der Formel (11) u.a. Mercaptoessigsäure (auch Thioglycolsäure genannt), 2-Mercaptopropionsäure (auch Thiomilchsäure genannt), 3-Mercaptopropionsäure, Mercaptobuttersäure, Mercaptoisobuttersäure, Mercaptocapronsäure, Mercaptobernsteinsäsure (auch Thioapfelsäure genannt), Mercaptomalonsäure, Mercaptophthalsäure (auch Thiosalicylsäure genannt), Mercaptoterephthalsäure oder Mercaptobrenztraubensäure eingesetzt. Bevorzugt sind Thiosalicyl-, Thiomilch-, Thioapfel- und insbesondere Thioglycolsäure.

In einer weiteren Ausführungsform zur Herstellung der erfindungsgemässen, anionisch modifizierten Polysaccharide wird das Polysaccharid der angegebenen Art zuerst mit Methylolacrylamid als Methylolverbindung (hergestellt aus Acrylamid und Formaldehyd oder einem Formaldehyd abgebenden Mittel, wie z.B. Paraformaldehyd, Hexamethylentetramin oder Trioxan bei höchstens 100°C, vorzugsweise 20 bis 60°C in wässrigem Medium gegebenenfalls in Gegenwart eines basischen Katalysators wie z.B. Natriummethylat oder vor allem Natriumhydroxid) zu einem acrylmodifizierten Polysaccharid als Zwischenprodukt umgesetzt, worauf durch Addition der Verbindung der Formel (11) an der Doppelbindung des Zwischenproduktes, welches acrylmodifizierte, an den Polysaccharidbestandteil verbundene, nicht-ionische Bestandteile der Formel

$$(12)\quad -O-CH_2-NH-CO-CH=CH_2$$

aufweist, der anionische Bestandteil eingeführt wird.

Bevorzugt wird das Polysaccharid der angegebenen Art mit der Methylolverbindung der Formel (10) in wässrigem Medium bei pH 2 bis 6 und bei Raumtemperatur, z.B. 15 bis 30°C, während etwa 20 bis 40 Minuten unter Rühren gehalten, dann bei 70 bis 80°C getrocknet und schliesslich einer Wärmebehandlung bei 100 bis 150°C während etwa 1 bis 2 Stunden unterworfen. In einer weiteren, bevorzugten Ausführungsform des Herstellungsverfahrens wird das Cellulosepulver mit Methylolacrylamid als Methylolverbindung in wässrigem Medium bei pH 2 bis 6 und 15 bis 50°C vorzugsweise in Gegenwart eines Polymerisationsinhibitors wie z.B. Hydrochinon während etwa 20 bis 40 Minuten unter Rühren gehalten, dann bei 70 bis 80°C getrocknet, hierauf einer Wärmebehandlung bei 100 bis 150°C während 1 bis 2 Stunden unterworfen, wobei in einer letzten Stufe der anionische Bestandteil durch Addition der Verbindung der Formel (11) in wässrigem Medium bei pH 7,0 bis 12,5, vorzugsweise 9,0 bis 12,0 und 15 bis 70°C während etwa 0,5 bis 3 Stunden an die Doppelbindung des acrylmodifizierten Zwischenproduktes der Formel (12) eingeführt wird und das anionisch modifizierte Polysaccharid schliesslich bei 70 bis 80°C getrocknet wird. Bei beiden Verfahrensvarianten ist es vorteilhaft, vor der Trocknung bei 70 bis 80°C eine Lagerung des mit der Methylolverbindung imprägnierten Polysaccharids bei Raumtemperatur, z.B. 15 bis 30°C, während mindestens 24 Stunden (sogenanntes Kaltlagerverfahren) einzuschalten.

Die erfindungsgemässen, anionisch modifizierten Polysaccharide finden Verwendung zum Reinigen von Abwässern, wie dies für anionisch modifizierte Cellulosematerialien z.B. in der deutschen Offenlegungsschrift 2 925 689 beschrieben ist. Bei der Abwasserreinigung können z.B. Farbstoffe und im allgemeinen auch Kationen, insbesondere Schwermetallkationen wie Cadmium-, Quecksilber- und Chromkationen entfernt werden. Vorzugsweise eignen sich die anionisch modifizierten Polysaccharide indessen besonders gut dazu, Substanzgemische, in der Regel als wässrige Lösungen, die mindestens einen Anteil amphoterer oder kationischer Komponenten aufweisen, zu trennen. Das an sich bekannte, chromatographische Trennverfahren solcher Substanzgemische zeichnet sich dadurch aus, dass die erfindungsgemässen, anionisch modifizierten Polysaccharide, die ein Ionenaustauschvermögen aufweisen, als stationäre Phase eingesetzt werden.

Hierbei werden die anionisch modifizierten Polysaccharide z.B. ansatzweise im sogenannten "Batchverfahren" (auch "Satz-Betrieb" genannt) eingesetzt. Auch das sogenannte "kontinuierliche Fliessbettverfahren" kommt in Betracht. Bevorzugt werden jedoch die anionisch modifizierten Polysaccharide als stationäre Phase von chromatographischen Trennsäulen (im sogenannten "Säulenverfahren") verwendet. Im Fliessbettverfahren wird die stationäre Phase ständig in Bewegung gehalten, im Gegensatz zum Festbettverfahren, das z.B. im Satzbetrieb oder Säulenverfahren angewendet wird. Als chromatographisches Trennverfahren im Sinne der vorliegenden Erfindung ist ein reversibles Verfahren zu verstehen, bei welchem nach der Trennung die getrennten Substanzen aus der stationären Phase zurückgewonnen werden können und das Trennmaterial durch Regeneration wieder in seine ursprüngliche Arbeitsform zurückgeführt werden kann (vgl. z.B. Seiten 3 bis 24 der Monographie "Ionenaustauscher" von K. Dorfner, 3. Aufl. 1970, W. de Gruyter & Co.).

Vor allem organische Substanzgemische jeglicher Zusammensetzung können in ihre Komponenten aufgetrennt werden, sofern mindestens eine der Komponenten der Substanzgemische kationisch oder amphoter geladen ist. Als Beispiele möglicher Substanzgemische seien u.a. technische Gemische von Farbstoffen, Pharmazeutika (Anreicherung oder Reinigung von Fermentationsbrühen), Kunststoffadditiven, Textilhilfsmitteln, Netzmitteln und Dispergatoren wie z.B. Ligninderivaten erwähnt.

Als Verwendung der erfindungsgemässen, anionisch modifizierten Polysaccharide, die von besonderem Interesse ist, sei die chromatographische Trennung von Ligninaminen, d.h. von Umsetzungsprodukten aus Lignin und Diäthylamin, die im Handel erhältlich sind (z.B. INDULIN® Marken), erwähnt. Solche Ligninamine sind z.B. als Emulgatorzusätze für Bitumenemulsionen bekannt und für den Strassenbau von Bedeutung.

Auch die chromatographische Trennung von Fermentationsbrühen zur Herstellung von Pharmazeutika, wie z.B. Eglin C, ein aus Blutegeln (Hirudo medicinalis) isolierter Protease-Inhibitor, ist von besonderer Bedeutung.

Der wesentlichste Vorteil der erfindungsgemässen, anionisch modifizierten Polysaccharide besteht darin, dass sie dank ihrer guten Trenneigenschaften und ihrem guten Fliessverhalten als stationäre Phase in chromatographischen Trennverfahren einwandfrei einsetzbar sind, wobei unter Verwendung von sowohl alkalischen als auch sauren Elutionsmitteln der ganze pH-Bereich von pH etwa 1 bis etwa 13 ausgenützt werden kann.

In den nachstehenden Beispielen beziehen sich die angegebenen Teile und Prozente auf das Gewicht.

Herstellung von Methylolverbindungen als Zwischenprodukt

Beispiel 1 : 3-Carboxymethylthio-N-Hydroxymethyl-propionsäureamid.

Zu einer Lösung von 106,6 Teilen Acrylamid (1,5 Mol) in 250 Teilen entionisiertem Wasser werden innerhalb von 10 Minuten 138 Teile Mercaptoessigsäure (1,5 Mol) gegeben, wobei sich die Temperatur des Reaktionsgemisches von selber auf 35°C erhöht. Nach beendeter Mercaptoessigsäurezugabe werden dem Reaktionsgemisch 100 Teile einer 30%igen, wässrigen Natriumhydroxidlösung zugesetzt, wobei sich ein pH-Wert des Reaktionsgemisches von 10,0 einstellt. Anschliessend wird das Reaktionsgemisch auf die Rückflustemperatur von etwa 98°C aufgeheizt und während einer Stunde bei dieser Temperatur und bei pH 10,0, nötigenfalls unter portionsweiser Zugabe der Natriumhydroxidlösung gehalten, und anschliessend auf 20°C gekühlt. Durch Zugabe einer wässrigen, 1N Salzsäurelösung wird der pH-Wert des Reaktionsgemisches von ursprünglich 10,0 auf 9,5 gesenkt. Zum Reaktionsgemisch werden hierauf 45 Teile Paraformaldehyd (1,5 Mol) gegeben. Das Reaktionsgemisch wird hierauf auf 50°C aufgeheizt und während 16 Stunden bei dieser Temperatur gehalten. Man erhält 784 Teile einer 45%-igen, wässrigen, leicht viskosen, gelblichen Lösung des methylolierten Umsetzungsproduktes der Formel

$$(13) \quad \overset{Na^{\oplus}}{{}^{\ominus}OOC}-CH_2-S-CH_2-CH_2-CO-NH-CH_2OH$$

Beispiel 2 : 3-(2-Carboxyphenyl)-thio-N-Hydroxymethyl-propionsäureamid.

Man verfährt wie in Beispiel 1 angegeben, setzt jedoch 35,5 Teile Acrylamid (0,5 Mol) in 100 Teilen entionisiertes Wasser ein, gibt innerhalb von 20 Minuten 77,1 Teile 2-Mercaptophthalsäure (0,5 Mol), stellt den pH-Wert von 10,0 des Reaktionsgemisch mit 90 Teilen der 30%igen, wässrigen Natriumhydroxidlösung ein und versetzt das Reaktionsgemisch bei pH 9,5 nach dem Salzsäurezusatz mit 15 Teilen Paraformaldehyd (0,5 Mol). Man erhält 328 Teile einer 42%igen, wässrigen, leicht viskosen, gelblichen Lösung des methylolierten Umsetzungsproduktes der Formel

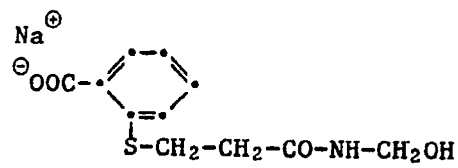

Beispiel 3 : 3-(1,3-Dicarboxyethyl)-thio-N-Hydroxymethyl-propionsäureamid.

Man verfährt wie in Beispiel 1 angegeben, setzt jedoch 35,5 Teile Acrylamid (0,5 Mol) in 100 Teilen entionisiertes Wasser ein, gibt innerhalb von 20 Minuten 75 Teile Mercaptobernsteinsäure (0,5 Mol), stellt den pH-Wert von 10,0 des Reaktionsgemisch mit 90 Teilen der 30%igen, wässrigen Natriumhydroxidlösung ein und versetzt das Reaktionsgemisch bei pH 9,5 nach dem Salzsäurezusatz mit 50 Teilen einer wässrigen, 30%igen Paraformaldehydlösung (0,5 Mol). Man erhält 365 Teile einer 37%igen, wässrigen, leicht viskosen, gelblichen Lösung des methylolierten Umsetzungsproduktes der Formel

(15) 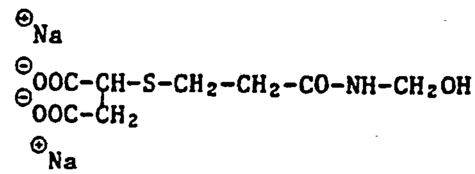

Beispiel 4 : 3-(1-Carboxyethyl)-thio-N-Hydroxymethyl-propionsäureamid.

Man verfährt wie in Beispiel 1 angegeben, setzt jedoch 35,5 Teile Acrylamid (0,5 Mol) in 100 Teilen entionisiertes Wasser ein, gibt innerhalb von 20 Minuten 53 Teile 2-Mercaptopropionsäure (0,5 Mol), stellt den pH-Wert von 10,0 des Reaktionsgemisch mit 90 Teilen der 30%igen, wässrigen Natriumhydroxidlösung ein und versetzt das Reaktionsgemisch bei pH 9,5 nach dem Salzsäurezusatz mit 15 Teilen Paraformaldehyd (0,5 Mol). Man erhält 304 Teile einer 43%igen, wässrigen leicht viskosen, gelblichen Lösung des methylolierten Umsetzungsproduktes der Formel

(16) 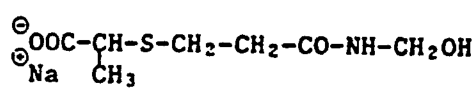

Herstellung von anionisch modifizierten Polysacchariden

Beispiel 5 : 20 Teile eines Cellulosepulvers aus mikrokristalliner Kraft-Cellulose mit einem Polymerisationsgrad von 530, wobei das Pulver aus Teilchen besteht, die eine BET-Oberfläche von 0,88 $m^2/g$ und einen Quellungsgrad in Wasser bei 20°C von 5,6 ml/g aufweisen, werden mit 100 Teilen der 45%-igen, wässrigen Lösung des methylolierten Umsetzungsproduktes gemäss Beispiel 1 bei 20°C während 30 Minuten vermischt und hierauf mit einer wässrigen, 1N Salzsäurelösung auf den pH-Wert von 3,0 eingestellt. Nach Abfiltrieren der Celluloseanschlämmung wird das imprägnierte Cellulosepulver zuerst bei 20°C während 24 Stunden gelagert und dann unter vermindertem Druck bei 70°C getrocknet. Anschliessend wird die Kondensation des methylolierten Umsetzungsproduktes mit den Hydroxylgruppen der Cellulose während 75 Minuten bei 130°C durchgeführt. Das so behandelte Cellulosepulver wird zuerst mit einer 10%igen, wässrigen Natriumcarbonatlösung, die einen pH-Wert von 11,0 aufweist, und anschliessend mit entionisiertem Wasser gewaschen, bis eine Probe des Waschwassers einen pH-Wert von 7 bis 8 aufweist, dann bei 70°C unter vermindertem Druck getrocknet und

im Mörser zerkleinert. Man erhält 22,5 Teile eines gelbstichigen, pulverförmigen, feinkörnigen, anionisch modifizierten Cellulosematerials, das ein Ionenaustauschvermögen von 3,8 meq/g, einen Substitutionsgrad von 0,33 und sehr gute Durchflusseigenschaften aufweist und anionisch modifizierte Saccharideinheiten der Formel

$$(17) \qquad Sa{-}O{-}CH_2{-}NH{-}CO{-}CH_2{-}CH_2{-}S{-}CH_2{-}COO^{\ominus}\ Na^{\oplus}$$

enthält, worin Sa für einen Saccharidrest steht.

Die Bestimmungsmethode des Ionenaustauschvermögens ist z.B. auf Seite 253 der Monographie "Cellulosic Ion Exchangers" von E.A. Peterson (Aufl. 1980, Elsevier) beschrieben.

Beispiel 6 :

Man verfährt wie in Beispiel 5 angegeben, setzt jedoch 20,5 Teile Cellulosepulver der Handelsmarke SOLCA FLOC® BW 100 ein, stellt die Celluloseanschlämmung mit der Salzsäurelösung auf den pH-Wert von 3,5 (statt 3,0) ein und lagert das imprägnierte Cellulosepulver bei 20°C während 16 Stunden (statt 24 Stunden). Nach dem Waschen, Trocknen und Zerkleinern des Materials (wie in Beispiel 5 angegeben) erhält man 23,5 Teile eines gelbstichigen, pulverförmigen, feinkörnigen, anionisch modifizierten Cellulosematerials, das ein Ionenaustauschvermögen von 1,4 meq/g, einen Substitutionsgrad von 0,35 und sehr gute Durchflusseigenschaften aufweist und anionisch modifizierte Saccharideinheiten der Formel (17) enthält.

Beispiel 7 :

Stufe I

100 Teile des in Beispiel 5 als Ausgangsmaterial eingesetzten Cellulosepulvers werden mit 500 Teilen einer 60%igen, wässrigen Monomethylolacrylamidlösung und 0,1 Teilen Hydrochinon vermischt. Dises Gemisch wird mit einer wässrigen 1 N Salzsäurelösung auf den pH-Wert von 3,5 eingestellt und während 30 Minuten unter leichtem Rühren bei 20°C gehalten. Hierauf wird die Anschlämmung abfiltriert. Das noch feuchte, imprägnierte Cellulosematerial wird während 24 Stunden bei 20°C gelagert und anschliessend unter vermindertem Druck während 5 Stunden bei 70°C getrocknet. Die Kondensationsreaktion wird dann während 60 Minuten bei 120°C durchgeführt. Nach dem Waschen, Trocknen und Zerkleinern des Materials (wie in Beispiel 5 angegeben) erhält man 180 Teile eines gelbstichigen, pulverförmigen, acrylmodifizierten Cellulosematerials, das einen Substitutionsgrad von 0,9 aufweist,und modifizierte Saccharideinheiten der Formel

$$(18) \qquad Sa{-}O{-}CH_2{-}NH{-}CO{-}CH{=}CH_2$$

enthält, worin Sa für einen Saccharidrest steht.

Stufe II

20 Teile des nach vorstehend angegebenen Stufe erhaltenen acrylmodifizierten Cellulosematerials werden in 80 Teilen entionisiertem Wasser aufgeschlämmt. Zu dieser Anschlämmung werden 20 Teile Mercaptoessigssäure gegeben. Das Reaktionsgemisch wird durch Zusatz einer 30%-igen, wässrigen Natriumhydroxidlösung auf den pH-Wert von 10,0 eingestellt, wobei die Temperatur des Reaktionsgemisches von selber auf 50°C steigt. Hierauf wird die Anschlämmung auf 60°C aufgeheizt, während einer Stunde bei dieser Temperatur gehalten und abfiltriert. Nach dem Waschen, Trocknen und Zerkleinern des Materials (wie in Beispiel 5 angegeben) erhält man 21 Teile eines gelbstichigen, pulverförmigen, feinkörnigen, anionisch modifizierten Cellulosematerials, das ein Ionenaustauschvermögen von 1,0 meq/g, einen Substitutionsgrad von 0,27 und sehr gute Durchflusseigenschaften aufweist und anionisch modifizierte Saccharideinheiten der Formel (17) enthält.

Beispiel 8 :

Stufe I

50 Teile Weissdextrin werden mit 250 Teilen einer 60%igen, wässrigen Monomethylolacrylamidlösung und 0,025 Teilen Hydrochinon aufgeschlämmt. Diese Anschlämmung, deren pH-Wert 2,5 beträgt, wird während 30 Minuten unter Rühren bei 20°C gehalten. Hierauf wird die Anschlämmung abfiltriert. Das noch feuchte, imprägnierte Dextrin wird während 24 Stunden bei 20°C gelagert und anschliessend unter vermindertem Druck bei 70°C getrocknet. Die Kondensationsreaktion wird dann während 60 Minuten bei 120°C durchgeführt. Nach dem Waschen, Trocknen und Zerkleinern des Materials (wie in Beispiel 5 angegeben) erhält man 50 Teile eines gelbstichigen, pulverförmigen, acrylmodifizierten Dextrins, das einen Substitutionsgrad von 0,95 aufweist und modifizierte Saccharideinheiten der Formel (18) enthält.

Stufe II

20 Teile des nach vorstehend angegebenen Stufe erhaltenen acrylmodifizierten Dextrins werden in 80 Teilen entionisiertem Wasser aufgeschlämmt. Zu dieser Anschlämmung werden 20 Teile Mercaptoessigsäure gegeben. Das Reaktionsgemisch wird durch Zusatz einer 30%-igen, wässrigen Natriumhydroxidlösung auf den pH-Wert von 10,0 eingestellt, wobei die Temperatur des Reaktionsgemisches von selber auf 50°C steigt. Hierauf wird die Anschlämmung auf 60°C aufgeheizt und während einer Stunde bei dieser Temperatur unter Rühren gehalten. Die Anschlämmung wird dann abfiltriert. Nach dem Waschen, Trocknen und Zerkleinern des Materials (wie in Beispiel 5 angegeben) erhält man 20 Teile eines gelbstichigen, pulverförmigen, anionisch modifizierten Dextrins, das ein Ionenaustauschvermögen von 5,1 meq/g, einen Substitutionsgrad von 0,6 und sehr gute Durchflusseigenschaften aufweist und anionisch modifizierte Saccharideinheiten der Formel (17) enthält.

Beispiel 9 :

Stufe I

20 Teile Agarose werden mit 50 Teilen einer 60%-igen, wässrigen Monomethylolacrylamidlösung und 0,1 Teilen Hydrochinon vermischt. Dises Gemisch wird mit einer wässrigen 1 N Salzsäurelösung auf den pH-Wert von 3,0 eingestellt und während 30 Minuten unter leichtem Rühren bei 20°C gehalten. Hierauf wird die Anschlämmng abfiltriert. Die noch feuchte, imprägnierte Agarose wird während 24 Stunden bei 20°C gelagert und anschliessend unter vermindertem Druck bei 60°C getrocknet. Die Kondensationsreaktion wird dann während 60 Minuten bei 120°C durchgeführt. Nach dem Waschen, Trocknen und Zerkleinern des Materials (wie in Beispiel 5 angegeben) erhält man 25 Teile einer gelbstichigen, pulverförmigen, acrylmodifizierten Agarose, die einen Substitutionsgrad von 0,95 aufweist und das modifizierte Saccharideinheiten der Formel (18) enthält.

Stufe II

12 Teile der nach vorstehend angegebenen Stufe erhaltenen acrylmodifizierten Agarose werden in 120 Teilen entionisiertem Wasser aufgeschlämmt. Zu dieser Anschlämmung werden innerhalb von 10 Minuten 12 Teile Mercaptoessigsäure gegeben, wobei die Temperatur des Reaktionsgemisches von selber auf 30°C steigt. Der pH-Wert des Reaktionsgemisches wird durch Zusatz einer 30%-igen, wässrigen Natriumhydroxidlösung auf 10,0 gestellt, wobei sich die Temperatur des Reaktionsgemisches von selber auf 50°C erhöht. Hierauf wird die Anschlämmung auf 60°C aufgeheizt, während einer Stunden bei dieser Temperatur gehalten und abfiltriert. Man erhält 13 Teile eines gelben Pulvers, das, wie in Beispiel 5 angegeben, gewaschen (bis der pH-Wert des Waschwassers 8,0 beträgt), getrocknet und zerkleinert wird. Die nun farblose, pulverförmige, feinkörnige, anionisch modifizierte Agarose weist ein Ionenaustauschvermögen von 2,5 meq/g, einen Substitutionsgrad von 0,3 und sehr gute Durchflusseigenschaften auf und enthält anionisch modifizierte Saccharideinheiten der Formel (17).

Beispiel 10 :

10 Teile eines mit Epichlorhydrin vernetzten Dextranpulvers (SEPHADEX® G 50) werden mit 50 Teilen der 45%-igen wässerigen Lösung des methylolierten Umsetzungsproduktes gemäss Beispiel 1 bei 20°C während 30 Minuten vermischt und hierauf mit einer wässerigen, 1N Salzsäurelösung auf den pH-Wert von 3,0 eingestellt. Dieses feuchte, vernetzte Dextrin wird zuerst bei 20°C während 24 Stunden gelagert und dann unter vermindertem Druck bei 70°C getrocknet. Anschliessend wird die Kondensation des methylolierten Umsetzungsproduktes mit den Hydroxylgruppen des vernetzten Dexrins während 75 Minuten bei 130°C durchgeführt. Nach dem Waschen, Trocknen und Zerkleinern des Materials (wie in Beispiel 5 angegeben) erhält man 17 Teile eines gelbstichigen, pulverförmigen, feinkörnigen, anionisch modifizierten, vernetzten Dextrins, das ein Ionenaustauschvermögen von 4,5 meq/g, einen Substitutionsgrad von 0,8 und sehr gute Durchflusseigenschaften aufweist und anionisch modifizierte Saccharideinheiten der Formel (17) enthält.

Beispiel 11 :

500 Teile einer mit Butandioldiglycidylether vernetzten Agarose (SEPHAROSE® CL 6B, 6%ige, wässrige Anschlämmung) werden nach Abfiltrieren und Waschen mit entionisiertem Wasser als feuchtes Material mit 180 Teilen der 45%igen wässerigen Lösung des methylolierten Umsetzungsproduktes gemäss Beispiel 1 bei 20°C während 30 Minuten vermischt und hierauf mit einer wässerigen 1N Salzsäurelösung auf den pH-Wert von 3,0 eingestellt. Dieses feuchte, vernetzte Agarosepulver wird zuerst bei 20°C während 24 Stunden gelagert und dann unter vermindertem Druck bei 70°C getrocknet. Anschliessend wird die Kondensation des methylolierten Umsetzungsproduktes mit den Hydroxylgruppen der vernetzten Agarose während 75 Minuten bei 130°C durchgeführt. Nach dem Waschen, Trocknen und Zerkleinern des Materials (wie in Beispiel 5 angegeben) erhält man 38 Teile einer gelbstichigen, pulverförmigen, feinkörnigen, anionisch modifizierten, vernetzten Agarose, die ein Ionenaustauschvermögen von 1,75 meq/g, einen Substitutionsgrad von 0,3 und sehr gute Durchflusseigenschaften aufweist und anionisch modifizierte Saccharideinheiten der Formel (13) enthält.

Beispiel 12 :

Man verfährt wie in Beispiel 5 angegeben, wäscht jedoch das mit dem methylolierten Umsetzungsprodukt behandelte Cellulosepulver mit einer 10%igen, wässrigen Kaliumcarbonatlösung, die einen pH-Wert von 11,0 aufweist. Das anschliessende Nachwaschen mit Wasser, Trocknen und Zerkleinern des Cellulosematerials wird ebenfalls wie in Beispiel 5 angegeben durchgeführt. Man erhält 22,5 Teile eines gelbstichigen, pulverförmigen, feinkörnigen, anionisch modifizierten Cellulosematerials, das ein Ionenaustauschvermögen von 1,30 meq/g, einen Substitutionsgrad von 0,25 und sehr gute Durchflusseigenschaften aufweist und anionisch modifizierte Saccharideinheiten der Formel

$$(19)\quad Sa-O-CH_2-NH-CO-CH_2-CH_2-S-CH_2-COO^{\ominus}\ K^{\oplus}$$

enthält, worin Sa für einen Saccharidrest steht.

Beispiel 13 :

Man verfährt wie in Beispiel 5 angegeben, wäscht jedoch das mit dem methylolierten Umsetzungsprodukt behandelte Cellulosepulver mit einer 10%igen, wässrigen Ammoniumcarbonatlösung, die einen pH-Wert von 10,5 aufweist. Das anschliessende Nachwaschen mit Wasser, Trocknen und Zerkleinern des Cellulosematerials wird ebenfalls wie in Beispiel 5 angegeben durchgeführt. Man erhält 22 Teile eines gelbstichigen, pulverförmigen, feinkörnigen, anionisch modifizierten Cellulosematerials, das ein Ionenaustauschvermögen von 1,30 meq/g, einen Substitutionsgrad von 0,25 und sehr gute Durchflusseigenschaften aufweist und anionisch modifizierte Saccharideinheiten der Formel

$$(20)\quad Sa-O-CH_2-NH-CO-CH_2-CH_2-S-CH_2-COO^{\ominus}\ NH_4^{\oplus}$$

enthält, worin Sa für einen Saccharidrest steht.

Beispiel 14 :

Man verfährt wie in Beispiel 5 angegeben, setzt jedoch 20 Teile einer Agarose ein, die eine Geliertemperatur von 42°C und eine durchschnittliche Gelstärke von 1500 g/m² aufweist, stellt das Gemisch aus Agarose

und dem methylolierten Umsetzungsprodukt mit der 1N Salzsäurelösung auf den pH-Wert von 3,5 (statt 3,0) ein und führt nach der Lagerung der imprägnierten Agarose die Kondensation des methylolierten Umsetzungsproduktes mit den Hydroxylgruppen der Agarose während 45 (statt 75) Minuten bei 130°C durch. Anschliessend wird die so behandelte Agarose zuerst mit entionisiertem Wasser und dann mit einer 10%igen, wässrigen Natriumcarbonatlösung gewaschen, bis eine Probe des Waschwassers den pH-Wert von 10,0 aufweist. Das Nachwaschen mit entionisiertem Wasser erfolgt solang bis eine Probe des Waschwassers einen pH-Wert von 8,0 aufweist. Nach dem Trocknen und Zerkleinern des Materials (wie in Beispiel 5 angegeben) erhält man 25 Teile einer gelbstichigen, pulverförmigen, feinkörnigen, anionisch modifizierten Agarose, die ein Ionenaustauschvermögen von 2 meq/g, einen Substitutionsgrad von 0,33 und sehr gute Durchflusseigenschaften aufweist und anionisch modifizierte Saccharideinheiten der Formel (17) enthält.

Beispiel 15 :

20 Teile eines mit Epichlorhydrin vernetztes Dextrans (vgl. H.Determann, Gelchromatographie, Seite 17, Springer Verlag Berlin, 1967) (mittleres Molekulargewicht des unvernetzten Dextrans : 40'000) werden in 100 Teilen entionisiertem Wasser aufgequollen. Nach dem Abdekantieren des überstehenden Wassers wird der gequollene Brei des vernetzten Dextrans (an Stelle von 20 Teilen Cellulosepulver) wie in Beispiel 5 angegeben mit dem methylolierten Umsetzungsprodukt behandelt. Nach dem Waschen, Trocknen und Zerkleinern des Materials erhält man 26 Teile eines gelbstichigen, pulverförmigen, feinkörnigen, anionisch modifizierten, vernetzten Dextrans, das ein Ionenaustauschvermögen von 5,3 meq/g, einen Substitutionsgrad von 0,90 und sehr gute Durchflusseigenschaften aufweist und anionisch modifizierte Saccharideinheiten der Formel (17) enthält.

Beispiel 16 :

Man verfährt wie in Beispiel 5 angegeben, setzt jedoch 25 Teile des Cellulosepulvers und 125 Teile einer 42%igen, wässrigen Lösung des methylolierten Umsetzungsproduktes gemäss Beispiel 2 ein. Nach dem Waschen, Trocknen und Zerkleinern des Materials erhält man 29 Teile eines gelbstichigen, pulverförmigen, feinkörnigen, anionisch modifizierten Cellulosematerials, das ein Ionenaustauschvermögen von 0,90 meq/g, einen Substitutionsgrad von 0,2 und sehr gute Durchflusseigenschaften aufweist und anionisch modifizierte Saccharideinheiten der Formel

(21) 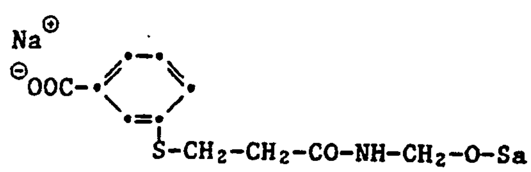

enthält, worin Sa, für einen Saccharidrest steht.

Beispiel 17 :

Man verfährt wie in Beispiel 15 angegeben, setzt jedoch 25 Teile des mit Epichlorhydrin vernetzten Dextrans gemäss Beispiel 15 und 125 Teile einer 42%igen, wässrigen Lösung des methylolierten Umsetzungsproduktes gemäss Beispiel 2 ein. Nach dem Waschen, Trocknen und Zerkleinern des Materials erhält man 20 Teile eines farblosen, pulverförmigen, feinkörnigen, anionisch modifizierten, vernetzten Dextrans, das ein Ionenaustauschvermögen von 5,10 meq/g, einen Substitutionsgrad von 0,89 und sehr gute Durchflusseigenschaften aufweist und anionisch modifizierte Saccharideinheiten der Formel (21) enthält.

Beispiel 18 :

Man verfährt wie in Beispiel 5 angegeben, setzt jedoch 25 Teile des Cellulosepulvers und 125 Teile einer 37%igen, wässrigen Lösung des methylolierten Umsetzungsproduktes gemäss Beispiel 3 ein. Nach dem Waschen, Trocknen und Zerkleinern des Materials erhält man 29 Teile eines farblosen, pulverförmigen, feinkörnigen, anionisch modifizierten Cellulosematerials, das ein Ionenaustauschvermögen von 0,54 meq/g, einen Substitutionsgrad von 0,23 und sehr gute Durchflusseigenschaften aufweist und anionisch modifizierte Saccharideinheiten der Formel

(22) 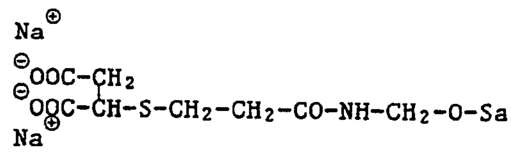

enthält, worin Sa für einen Saccharidrest steht.

Beispiel 19 : Man verfährt wie in Beispiel 5 angegeben, setzt jedoch 25 Teile des Cellulosepulvers und 125 Teile einer 43%igen, wässrigen Lösung des methylolierten Umsetzungsproduktes gemäss Beispiel 4 ein. Nach dem Waschen, Trocknen und Zerkleinern des Materials erhält man 28 Teile eines farblosen, pulverförmigen, feinkörnigen, anionisch modifizierten Cellulosematerials, das ein Ionenaustauschvermögen von 0,58 meq/g, einen Substitutionsgrad von 0,25 und sehr gute Durchflusseigenschaften aufweist und anionisch modifizierte Saccharideinheiten der Formel

(21) 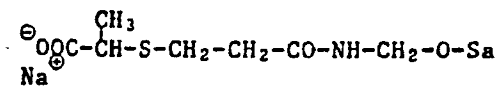

enthält, worin Sa für einen Saccharidrest steht.

Applikationsbeispiele

Beispiel 20 : Trennung eines handelsüblichen Ligninamingemisches.

7 Teile des anionisch modifizierten Polysaccharids gemäss Beispiel 5 werden in 70 Teilen destilliertem Wasser aufgeschlämmt und während 30 Minuten unter Rühren bei 20°C gehalten. Der pH-Wert der Anschlämmung beträgt 8,0. Die Anschlämmung wird nun in eine Chromatographiesäule aus Glas (Durchmesser 1,27 cm, Länge 33 cm) eingefüllt. Das homogene Bett des modifizierten Polysaccharids als stationäre Phase weist ein Volumen von 39 ml auf (Füllhöhe 31 cm). Bei einer Durchflussgeschwindigkeit von 700 ml $h^{-1}cm^{-2}$ (Gegendruck der Säule 1 bis 2 bar) wird das anionisch modifzierte Polysaccharid zuerst während einer Stunde mit destilliertem Wasser gespült. Nun wird die Säule mit 5 Teilen einer 0,5%igen, wässrigen Lösung eines handelsüblichen Ligninamingemisches, die einen pH-Wert von 8,7 aufweist, beschickt. Bei einer Durchflussgeschwindigkeit von 100 ml $h^{-1}cm^{-2}$ werden alle Komponenten des Ligninamingemisches auf dem modifizierten Polysaccharid adsorbiert.

Nun werden die Komponenten des Ligninamingemisches mit mehreren Elutionsmitteln mit steigenden pH-Werten als mobilen Phasen aus dem modifizierten Polysaccharid als stationärer Phase chromatographisch getrennt. Zu diesem Zweck wird ein Fraktionssammler eingesetzt, der das Eluat in Fraktionen von jeweils 4 ml abtrennt, wobei die Durchflussgeschwindigkeit der flüssigen Phase durch die stationäre Phase 100 ml $h^{-1}cm^{-2}$ beträgt. Die spektrale Absorption jeder der 4 ml Fraktionen wird bei 250 nm gemessen, um einen Konzentrationsvergleich bezüglich Komponenten des Ligninamingemisches zu ermöglichen. Die Fraktionen, die keine Absorption aufweisen, werden verworfen. Die Absorption aufweisenden Fraktionen werden gesammelt.

Es werden somit im Verlauf des Trennvorgangs 5 Komponenten des Ligninsulfonatgemisches eluiert. Der Verlauf der chromatographischen Trennung des Ligninamingemisches mit den verwendeten Elutionsmitteln wird in der nachfolgenden Tabelle angegeben. Für pH-Werte des Elutionsmittels von 6, 7 und 8 werden Phosphatpuffer nach Sörensen, für pH-Werte von 9, 10 und 11 Boraxpuffer und für den pH-Wert 13 eine wässrige Kaliumchlorid-Natriumhydroxid-Lösung (TITRISOL ®-Puffer) eingesetzt.

Tabelle:

| pH-Wert des Elutionsmittels | ml Eluat | Fraktionen | |
|---|---|---|---|
| | | Nr. | % des Gemisches |
| 6,0 | 80 | I | 16 % |
| 7,0 | 160 | II | - |
| 8,0 | 240 | III | 18 % |
| 9,0 | 320 | IV | 28 % |
| 10,0 | 400 | V | 30 % |
| 11,0 | 480 | VI | 8 % |
| 13,0 | 560 | VII | - |

Fraktion I ist praktisch nicht polar. Fraktion III weist die kleinste und Fraktion VI die grösste Polarität auf, wobei die Polärität der Fraktionen III bis VI kontinuierlich zunimmt.

Nach abgeschlossener Trennung des Ligninamingemisches mit insgesamt 560 ml Elutionsmittel wird das anionisch modifizierte Polysaccharid in der Chromatographiesäule mit 20 bis 30 ml einer wässrigen, 0,1 N Natriumhydroxidlösung zwecks Regeneration so lange gespült, bis das Eluat einen pH-Wert von 12 bis 13 aufweist. Anschliessend wird das regenerierte, anionisch modifizierte Polysaccharid mit 50 bis 100 ml entionisiertem Wasser gewaschen, bis das Eluat einen pH-Wert von 8,0 aufweist. In dieser Form steht das Polysaccharid als regenerierte, stationäre Phase für weitere chromatographische Trennungen bereit.

Aehnliche Ergebnisse werden erzielt, wenn man als stationäre Phase der Chromatographiesäule das anionisch modifizierte Polysaccharid gemäss einem der Beispiele 6, 10-18 oder 19 oder gemäss Stufe II der Beispiele 7, 8 oder 9 einsetzt.

Beispiel 21 :

Gewinnung von Eglin C und N$^{\alpha}$-Acetyl-eglin C aus transformiertem S. cerevisiae GRF 18/pJDB207R/PH05-EGL

a) Herstellung des transformierten S. cerevisiae-Stammes

Die Herstellung des Expressionsplasmids pJDB207R/PH05-EGL, welches das Eglin-Strukturgen enthält, und des damit transformierten Hefestammes S. cerevisiae GRF18 ist in der EP-A 1 46785 beschrieben und kann wie folgt durchgeführt werden :

6 µg des Plasmids pJDB207R/1F (α-3) (vgl. EP-A 100 561) werden vollständig mit der Restriktionsendonuklease BamHI verdaut. Die resultierenden DNA-Fragmente einer Grösse von 6,85 kb und 1,15 kb werden isoliert und in Tris-Puffer mit 4,5 Einheiten Kälberdarm alkalische Phosphatase (BOEHRINGER, Mannheim) dephosphatiert. Die Lösung wird auf 150 nM NaCl eingestellt und auf einen DE 52 (WHATMAN) Anionenaustauscher (100 µl-Bett), welcher mit 10 mM Tris-HCl pH 7,5 enthaltend 150 mM NaCl und 1 mM EDTA äquilibriert worden ist, aufgetragen. Nach dem Waschen mit dem gleichen Puffer wird die DNA mit 400 µl 1,5 M NaCl, 10 mM Tris-HCl pH 7,5, 1 mM EDTA eluiert und mit Ethanol gefällt. Das grosse 6,85 kb BamHI-Fragment wird auf einem 0,6%igen niedrigschmelzenden Agarosegel in Tris-Borat-EDTA Puffer pH 8,3 von dem kleinen Fragment abgetrennt.

10 µg des Plasmids p31/R (vgl. EP-A 100 561) werden mit den Restriktionsendonuklearen EcoRI und BamHI verdaut. Die 3 resultierenden Fragments werden auf einem 0,6%igen niedrigschmelzenden Agarosegel in Tris-Borat-EDTA Puffer pH 8,3 getrennt. Das 534 bp BamHI-EcoRI-Fragment, welches den PH05-Promoter einschliesslich des mRNA-Starts enthält, wird isoliert.

8 µg des Plasmids pML 147 (vgl. EP-Anm. 146 785) werden mit den Restriktionsendonukleasen BamHI und EcoRI verdaut. Die 2 resultierenden DNA-Fragmente werden auf einem 0,6%igen niedrigschmelzenden

Agarosegel in Tris-Borat-EDTA-Puffer pH 8,3 getrennt Das 221 bp Fragment wird isoliert.

0,1 pmol (0,45 µg) des 6,85 kb BamHI-Plasmidfragmentes, 0,2 pmol (70 ng) des 534 bp BamHI-EcoRI-PH05-Promoterfragmentes und 0,2 pmol (29 ng) des 221 bp EcoRI-BamHI-Fragments von pML 147 (enthalten in kleinen Gelblöcken von niedrigschmelzender Agarose) werden vereinigt, bei 65°C verflüssigt, 2-fach verdünnt und mit 16 Einheiten T4 DNA-Ligase (BOEHRINGER, Mannheim) bei 15°C während 16 Stunden ligiert.

Die Orientierung der 3 Fragmente im entstandenen Expressionsplasmid wird durch HindIII/EcoRI-Doppelverdau geprüft. Ein Plasmid mit der richtigen Orientierung wird isoliert und als pJDB207/PH05-EGL bezeichnet.

Das Plasmid pJDB207R/PH05-EGL wird in den Saccharomyces cerevisiae-Stamm GRF 18 transformiert. Transformierte Hefezellen werden auf Hefe-Minimalmediumplatten (ohne Leucin) selektiert. Einzelne transformierte Hefekolonien werden isoliert und als Saccharomyces cerevisiae GRF 18/pJDB207R/PH05-EGL bezeichnet.

Zellen von S. cerevisiae GRF18/pJDB207R/PH05-EGL werden in 300 ml Hefe Minimalmedium (DIFCO Yeast Nitrogen Base ohne Aminosäuren, dem 2% Glukose und 20 m/l L-Histidin zugegeben wurde) unter Schütteln bei 30°C während 24 Stunden bis zu einer Dichte von $3 \times 10^7$ Zellen/ml kultiviert. Die Zellen werden mit 0,9% NaCl gewaschen und dazu verwendet, 3 l eines niedrig $P_i$-Minimalmediums, welches nach der Vorschrift des DIFCO Yeast Nitrogen Base-Mediums (ohne Aminosäuren) mit 0,03 g/l $KH_2PO_4$, 1 g/l KCl, 10 g/l L-Asparagin an Stelle von $(NH_4)_2SO_4$, 2% Glukose und 1 g/l L-Histidin hergestellt wurde. Das Medium wird auf eine optische Dichte ($OD_{600}$) von 0,25 eingestellt. Die Zellen werden in einem Mini-Bioreaktor (Firma MBR) während 24 Stunden unter Rühren (500 rpm) bei 30°C kultiviert und bei einer optischen Dichte ($OD_{600}$) von 1,9 geerntet.

Die Kulturbrühe (3 l) der transformierten Hefezellen wird auf 4°C abgekühlt und zentrifugiert. Die Zellen im Zentrifugationsniederschlag werden in 150 ml Pufferlösung pH 7,4 [50 mM Phosphat pH 7,4, 4 mM ZWITTERGENT® (Tensid der CALBIOCHEM)] resuspendiert und mit Glaskügelchen zerschlagen. Die homogenisierte Lösung wird zentrifugiert und der Ueberstand mit gleichem Volumen 2%iger Essigsäure verdünnt. Die Suspension wird 15 Min bei 4000 rpm zentrifugiert, der Niederschlag abgetrennt und der trübe Ueberstand erneut zentrifugiert (60 Min bei 12 000 rpm).

b) Trennung des transformierten S. Cerevisiae-Stammes

Der klare Ueberstand wird durch die in Beispiel 20 angegebene Chromatographiesäule, die mit dem gemäss Beispiel 5 anionisch modifizierten Polysaccharid gefüllt ist, bei pH 4,0 durchgepumpt. Das Volumen des Säulenbettes, d.h. der stationären Phase, beträgt 32 ml. Die Elution wird mit einem linearen Salzgradienten von 5 Bettvolumen Puffer A und 5 Bettvolumen Puffer B durchgeführt. Puffer A : 20 mM Ammoniumacetat pH 4,0. Puffer B : 200 mM Ammoniumacetat pH 6,5. Durchflussmenge : 43 ml pro Stunde. Fraktionsmenge : 14 ml.

$N^\alpha$-acetyl-eglin C wird in den Fraktionen 29-31 (15 mg) gewonnen und wie beschrieben weiter durch semipräparative reversed phase HPLC gereinigt (Ausbeute : 8 mg $N^\alpha$-Acetyl-eglin C).

Eglin C wird in den Fraktionen 32 & 33 (24 mg) gewonnen.

Die beiden Egline sind biologisch aktiv und chemisch wie folgt charakterisiert :

| | | |
|---|---|---|
| Eglin C | isoelektrischer Punkt | 6,5 |
| | Molekulargewicht (FAB-MS) | 8091 |
| | N-terminale Aminosäure | Thr |
| $N^\alpha$-Acetyl-Eglin C | isoelektrischer Punkt | 5,4 |
| | Molekulargewicht (FAB-MS) | 8133 |
| | N-terminale Aminosäure | $N^\alpha$-Acetyl-Thr |

Das aus transformierten Hefezellen gewonnene Eglin C hat die gleichen Retentionszeiten im RP-HPLC wie das natürliche Eglin C aus Blutegeln.

Bedingungen der RP-HPLC-Methode :

Kolonne : NUCLEOSILC® 18 (4,6 × 120)

Puffer A : 0,1% Trifluoressigsäure
Puffer B : Acetonitril + 0,07% Trifluoressigsäure
Gradientenfahrweise : Start mit 30% Puffer A zunehmend bis 70% Puffer B in 20 Minuten
Durchflussgeschwindigkeit : 0,71 ml/Min.

## Ansprüche

1. Chemisch modifizierte, anionische Polysaccharide, dadurch gekennzeichnet, dass sie an den Polysaccharidbestandteil gebundene, saure Reste der Formel

$$Q_1^{\oplus}\ R_1^{\ominus}\text{-S-CH}_2\text{-CH}_2\text{-CO-NH-CH}_2\text{-O-}$$

aufweisen, worin $R_1^{\ominus}$ Carboxyalkyl oder Dicarboxyalkyl mit 1 bis 5 Kohlenstoffatomen im Alkylteil, Carboxyphenyl oder Ketocarboxymethyl und $Q_1^{\oplus}$ ein wasserlösliches Kation bedeuten.

2. Polysaccharide nach Anspruch 1, dadurch gekennzeichnet, dass sie Reste der Formel

$$Q_2^{\oplus}\ R_2^{\ominus}\text{-S-CH}_2\text{CH}_2\text{-CO-NH-CH}_2\text{-O-}$$

aufweisen, worin $R_2^{\ominus}$ $^{\ominus}OOC\text{-}(CH_2)_{m_1}\text{—}$ , 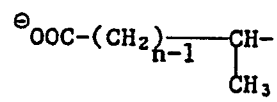 ,

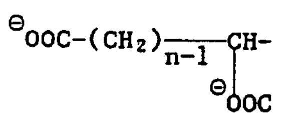 ,

$^{\ominus}OOC\text{-CO-CH}_2\text{-}$ oder 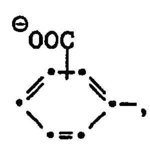,

$Q_2^{\oplus}$ Wasserstoff, ein Alkalimetall-oder Ammoniumkation, $m_1$ eine ganze Zahl von 1 bis 5 und n 1 oder 2 bedeuten.

3. Polysaccharide nach Anspruch 2, dadurch gekennzeichnet, dass sie Reste der Formel

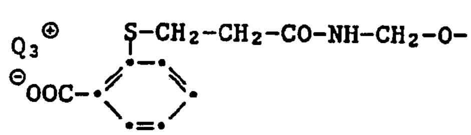 ,

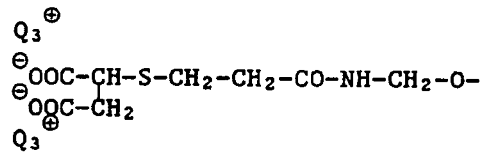

,

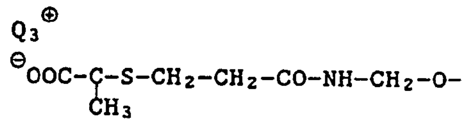

oder

$Q_3^{\oplus}$ $^{\ominus}OOC-CH_2-S-CH_2-CH_2-CO-NH-CH_2-O-$

aufweisen, worin $Q_3^{\oplus}$ für $H^{\oplus}$, $K^{\oplus}$, $Na^{\oplus}$ oder $NH_4^{\oplus}$ steht.

4. Polysaccharide nach einem der Ansprüche 1 bis 3, dadurch gekennzeichnet, dass sie aus vernetztem Dextran, gegebenenfalls vernetzten Dextrinen oder gegebenenfalls vernetzter Agarose, die anionisch modifiziert sind und glykosidische α-Verknüpfungen aufweisen oder aus anionisch modifizierter, glykosidische β-Verknüpfungen aufweisender Cellulose bestehen.

5. Polysaccharide nach einem der Ansprüche 1 bis 4, dadurch gekennzeichnet, dass sie einen Substitutionsgrad von 0,1 bis 0,95 aufweisen, bezogen auf die primäre–$CH_2OH$-Gruppe einer Saccharoseeinheit.

6. Verfahren zur Herstellung von anionisch modifizierten Polysacchariden gemäss einem der Ansprüche 1 bis 5, dadurch gekennzeichnet, dass man ein Polysaccharid mit einer Verbindung umsetzt, die eine Methylolverbindung der Formel

$$Q_1^{\oplus}\ R_1^{\ominus}-S-CH_2-CH_2-CO-NH-CH_2-OH$$

aufweist, worin $R_1^{\ominus}$ und $Q_1^{\oplus}$ die in Anspruch 1 angegebenen Bedeutungen haben.

7. Verfahren nach Anspruch 6, dadurch gekennzeichnet, dass man die Umsetzung des Polysaccharids mit der Methylolverbindung in wässrigem Medium bei pH 2 bis 6 und 15 bis 50°C durchführt, gegebenenfalls das so behandelte Material bei 15 bis 30°C während mindestens 24 Stunden lagert, dann bei 70 bis 80°C trocknet und schliesslich einer Wärmebehandlung bei 100 bis 150°C unterwirft.

8. Verfahren nach Anspruch 6, dadurch gekennzeichnet, dass man das Polysaccharid zuerst mit Methylolacrylamid als Methylolverbindung umsetzt und anschliessend den anionischen Bestandteil durch Additionsreaktion an der Doppelbindung des acrylmodifizierten Zwischenproduktes der Verbindung der Formel

$$R_1\text{-}SH,$$

worin $R_1$ die in Anspruch 1 angegebenen Bedeutungen hat, einführt.

9. Verfahren nach Anspruch 8, dadurch gekennzeichnet, dass man die Umsetzung des Polysaccharids mit Methylolacrylamid in wässrigem Medium bei pH 2 bis 6 und 15 bis 50°C gegebenenfalls in Gegenwart eines Polymerisationsinhibitors durchführt, gegebenenfalls das so behandelte Material bei 15 bis 30°C während mindestens 24 Stunden lagert, dann bei 70 bis 80°C trocknet, hierauf einer Wärmebehandlung bei 100 bis 150°C unterwirft und in der nächsten Stufe den ionischen Bestandteil durch Additionsreaktion mit den in Anspruch 8 angegebenen Verbindungen in wässrigem Medium bei pH 7,0 bis 12,5 und 15 bis 70°C einführt und das ionisch modifizierte Polysaccharid schliesslich bei 70 bis 80°C trocknet.

10. Verwendung der anionisch modifizierten Polysaccharide gemäss einem der Ansprüche 1 bis 5 zur Reinigung von Abwässern und zum Trennen von Substanzgemischen mit einem Anteil amphotherer oder kationischer Komponenten.

11. Chromatographisches Trennverfahren von Substanzgemischen mit einem Anteil amphotherer oder kationischer Komponenten, dadurch gekennzeichnet, dass man als stationäre Phase anionisch modifizierte Polysaccharide gemäss einem der Ansprüche 1 bis 5 einsetzt.

12. Methylolverbindungen als Zwischenprodukt zur Herstellung von anionisch modifizierten Polysacchariden gemäss einem der Ansprüche 1 bis 5, dadurch gekennzeichnet, dass sie der Formel

$$\begin{matrix} Q_1^{\oplus} \\ R_1^{\ominus}\text{-S-CH}_2\text{-CH}_2\text{-CO-NH-CH}_2\text{OH} \end{matrix}$$

entsprechen, worin $R_1^{\ominus}$ und $Q_1^{\oplus}$ die im Anspruch 1 angegebenen Bedeutungen haben.

13. Verfahren zur Herstellung der Methylolverbindungen gemäss Anspruch 12, dadurch gekennzeichnet, dass man eine Verbindung der Formel

$$R_1\text{-SH},$$

worin $R_1$ die im Anspruch 1 angegebenen Bedeutungen hat, zuerst mit Acrylamid und anschliessend mit Formaldehyd oder einem Formaldehyd abgebenden Mittel umsetzt.

## Claims

1. A chemically modified anionic polysaccharide which contains acid radicals of formula

$$\begin{matrix} Q_1^{\oplus} \\ R_1^{\ominus}\text{-S-CH}_2\text{-CH}_2\text{-CO-NH-CH}_2\text{-O-} \end{matrix}$$

attached to the polysaccharide component, in which $R_1^{\ominus}$ is carboxyalkyl or dicarboxyalkyl containing 1 to 5 carbon atoms in the alkyl moiety, or is carboxyphenyl or ketocarboxymethyl, and $Q_1^{\oplus}$ is a water-soluble cation.

2. A polysaccharide according to claim 1, which contains radicals of formula

$$\begin{matrix} Q_2^{\oplus} \\ R_2^{\ominus}\text{-S-CH}_2\text{CH}_2\text{-CO-NH-CH}_2\text{-O-} \end{matrix}$$

in which $R_2^{\ominus}$ is $^{\ominus}OOC\text{-}(CH_2)_{m1}\text{-}$, $^{\ominus}OOC\text{-}(CH_2)_{n-1}\text{-}CH(CH_3)\text{-}$,

$^{\ominus}OOC\text{-}(CH_2)_{n-1}\text{-}CH(COO^{\ominus})\text{-}$,

$^{\ominus}OOC\text{-CO-CH}_2\text{-}$ or 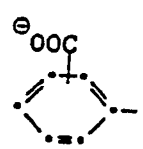, $Q_2^{\oplus}$ is hydrogen, an alkali metal cation or an ammonium cation, $m_1$ is an integer from 1 to 5 and n is 1 or 2.

3. A polysaccharide according to claim 2, which contains radicals of formula

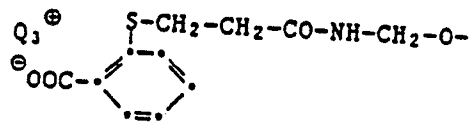

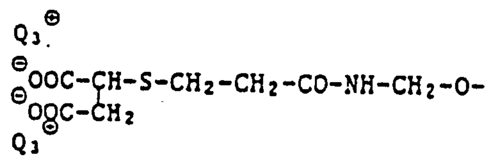

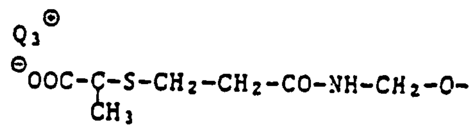

or

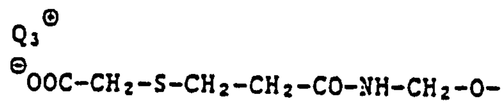

in which $Q_3^{\oplus}$ is $H^{\oplus}$, $K^{\oplus}$, $Na^{\oplus}$ or $NH_4^{\oplus}$.

4. A polysaccharide according to any one of claims 1 to 3, which consists of crosslinked dextran, uncrosslinked or crosslinked dextrins or uncrosslinked or crosslinked agarose, which are anionically modified and contain α-glycosidic linkages, or which consists of anionically modified cellulose which contains β-glycosidic linkages.

5. A polysaccharide according to any one of claims 1 to 4, which has a degree of substitution of 0.1 to 0.95, based on the primary–$CH_2OH$ group of one sucrose unit.

6. A process for the preparation of an anionically modified polysaccharide according to any one of claims 1 to 5, which comprises reacting a polysaccharide with a compound containing a methylol compound of formula

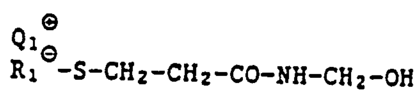

in which $R_1^{\ominus}$ and $Q_1^{\oplus}$ are as defined in claim 1.

7. A process according to claim 6, which comprises carrying out the reaction of the polysaccharide with the methylol compound in aqueous medium at a pH from 2 to 6 and at 15 to 50°C and, if desired, storing the material thus treated at 15 to 30°C for at least 24 hours, then drying said material at 70 to 80°C and, finally, subjecting it to a heat treatment at 100 to 150°C.

8. A process according to claim 6, which comprises reacting the polysaccharide first with methylolacrylamide as methylol compound and subsequently introducing the anionic component by addition of the compound of formula

$$R_1\text{-SH}$$

in which $R_1$ is as defined in claim 1, onto the double bond of the acrylic-modified intermediate.

9. A process according to claim 8, which comprises carrying out the reaction of the polysaccharide with methylolacrylamide in aqueous medium at a pH from 2 to 6 at 15 to 50°C, if desired in the presence of a polymerisation inhibitor, and, if desired, storing the material thus treated at 15 to 30°C for at least 24 hours and then drying it at 70 to 80°C, subsequently subjecting said material to a heat treatment at 100 to 150°C and, in the next step, introducing the ionic component by an addition reaction with the compound as indicated in claim 8, in aqueous medium at a pH from 7.0 to 12.5 and at from 15 to 70°C and, finally, drying the ionically modified polysaccharide at 70 to 80°C.

10. Use of an anionically modified polysaccharide according to any one of claims 1 to 5 for treating effluents and for separating mixtures of substances containing amphoteric or cationic components.

11. A chromatographic method of separating mixtures of substances containing amphoteric or cationic components, which comprises using, as stationary phase, an anionically modified polysaccharide according to any one of claims 1 to 5.

12. A methylol compound as intermediate for the preparation of an anionically modified polysaccharide according to any one of claims 1 to 5, said compound having the formula

$$Q_1^{\oplus}\ R_1^{\ominus}-S-CH_2-CH_2-CO-NH-CH_2OH$$

in which $R_1^{\ominus}$ and $Q_1^{\oplus}$ are as defined in claim 1.

13. A process for the preparation of a methylol compound according to claim 12, which comprises reacting a compound of formula

$$R_1-SH$$

in which $R_1$ is as defined in claim 1, first with acrylamide and then with formaldehyde or a formaldehyde donor.

## Revendications

1. Polysaccharides anioniques modifiés chimiquement, caractérisés en ce qu'ils présentent des restes acides, liés à la partie polysaccharide, de formule

$$Q_1^{\oplus}\ R_1^{\ominus}-S-CH_2-CH_2-CO-NH-CH_2-O-$$

dans laquelle $R_1^{\ominus}$ représente un groupe carboxyalkyle ou dicarboxyalkyle comportant 1 à 5 atomes de carbone dans la partie alkyle, un groupe carboxyphényle ou un groupe cétocarboxyméthyle, et $Q_1^{\oplus}$ représente un cation hydrosoluble.

2. Polysaccharides selon la revendication 1, caractérisés en ce qu'ils présentent des restes de formule

$$Q_2^{\oplus}\ R_2^{\ominus}-S-CH_2CH_2-CO-NH-CH_2-O-$$

dans laquelle $R_2^{\ominus}$ représente

$^{\ominus}OOC-(CH_2)_{m_1}-$ ,

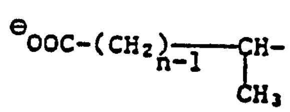

,

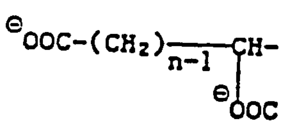

,

$^{\ominus}OOC-CO-CH_2-$ ou

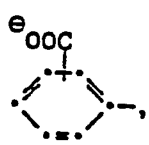

,

$Q_2^{\oplus}$ représente un atome d'hydrogène, un cation de métal alcalin ou ammonium, $m_1$ est un nombre entier de 1 à 5 et n vaut 1 ou 2.

3. Polysaccharides selon la revendication 2, caractérisés en ce qu'ils présentent des restes de formule

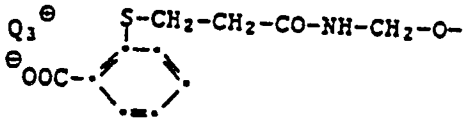

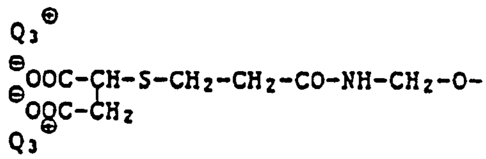

,

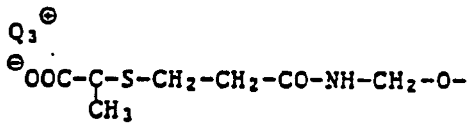

ou

$$Q_3^{\oplus}\ {}^{\ominus}OOC-CH_2-S-CH_2-CH_2-CO-NH-CH_2-O-$$

dans lesquelles $Q_3^{\oplus}$ est $H^{\oplus}$, $K^{\oplus}$, $Na^{\oplus}$ ou $NH_4^{\oplus}$.

4. Polysaccharides selon l'une quelconque des revendications 1 à 3, carartérisés en ce qu'ils sont constitués de dextrane réticulé, de dextrines éventuellement réticulées ou d'agarose éventuellement réticulé, modifiés par des anions et présentant des enchaînements α-glycosidiques, ou bien de cellulose à modification anionique et présentant des enchaînements β-glycosidiques.

5. Polysaccharides selon l'une quelconque des revendications 1 à 4, caractérisés en ce qu'ils présentent un degré de substitution de 0,1 à 0,95, par rapport au groupe $CH_2OH$ primaire d'un motif saccharose.

6. Procédé de préparation de polysaccharides à modification anionique selon l'une quelconque des revendications 1 à 5, caractérisé en ce que l'on fait réagir un polysaccharide avec un composé qui représente un composé hydroxyméthylique de formule

$$Q_1^{\oplus}\ R_1^{\ominus}-S-CH_2-CH_2-CO-NH-CH_2-OH$$

dans laquelle $R_1^{\ominus}$ et $Q_1^{\oplus}$ ont les définitions données dans la revendication 1.

7. Procédé selon la revendication 6, caractérisé en ce que l'on effectue la réaction du polysaccharide avec le composé hydroxyméthylique en milieu aqueux, à pH 2-6 et à 15-50°C, en ce qu'on laisse éventuellement reposer le produit ainsi traité à 15-30°C pendant au moins 24 heures, puis on le sèche à 70-80°C et finalement on le soumet a un traitement thermique à 100-150°C.

8. Procédé selon la revendication 6, caractérisé en ce que l'on fait d'abord réagir le polysaccharide avec l'hydroxyméthylacrylamide, comme composé hydroxyméthylé, et que l'on introduit ensuite le constituant anionique par une réaction d'addition, sur la double liaison du produit intermédiaire à modification acrylique, du composé de formule

$$R_1\text{-}SH$$

dans laquelle $R_1$ a les définitions indiquées dans la revendication 1.

9. Procédé selon la revendication 8, caractérisé en ce que l'on fait réagir le polysaccharide avec l'hydroxyméthylacrylamide en milieu aqueux, à pH 2-6 et à 15-50°C, éventuellement en présence d'un inhibiteur de polymérisation, en ce qu'on laisse éventuellement reposer le produit ainsi traité à 15-30°C pendant au moins 24 heures, puis on le sèche à 70-80°C et on le soumet ensuite à un traitement thermique à 100-150°C, et qu'au stade suivant, on introduit, en milieu aqueux, à pH 7,0-12,5 et à 15-70°C, le constituant ionique par une réaction d'addition avec les composés indiqués dans la revendication 8, et qu'on sèche enfin à 70-80°C le polysaccharide à modification ionique.

10. Emploi des polysaccharides à modification anionique de l'une quelconque des revendications 1 à 5 pour la purification des eaux usées et pour la séparation de mélanges de substances comportant une certaine

partie de composants amphotères ou cationiques.

11. Procédé de séparation chromatographique de mélanges de substances comportant une certaine partie de composants amphotères ou cationiques, caractérisé en ce que l'on utilise comme phase stationnaire des polysaccharides à modification anionique de l'une des revendications 1 à 5.

12. Composés hydroxyméthylés comme produits intermédiaires pour la préparation de polysaccharides à modification anionique selon l'une quelconque des revendications 1 à 5, caractérisés en ce qu'ils répondent à la formule

$$Q_1^{\ominus}\ R_1^{\oplus}-S-CH_2-CH_2-CO-NH-CH_2OH$$

dans laquelle $R_1^{\oplus}$ et $Q_1^{\ominus}$ ont les définitions données dans la revendication 1.

13. Procédé de préparation de composés hydroxyméthylés de la revendication 12, caractérisé en ce que l'on fait réagir un composé de formule

$$R_1\text{-SH},$$

dans laquelle $R_1$ a les définitions données dans la revendication 1, d'abord avec de l'acrylamide, puis avec du formaldéhyde ou un produit libérant du formaldéhyde.